# EUROPÄISCHE PATENTANMELDUNG

(11) **EP 2 028 367 A1**
(43) Veröffentlichungstag der Anmeldung: **25.02.2009**
(21) Anmeldenummer: 08013519.7
(22) Anmeldetag: 28.07.2008
(51) Int. Cl.: F03D 3/06, F03D 11/04

(54) **Windkraftmaschine**

(30) Priorität: 03.08.2007 DE 202007010873 U
(71) Anmelder: HEOS Energy GmbH, 09116 Chemnitz (DE); FIBER-TECH Products GmbH, 09116 Chemnitz (DE)
(72) Erfinder: Pfalz, Matthias, Dr., 09114 Chemnitz (DE); Hoffmann, Klaus, Dr.-Ing., 09116 Chemnitz (DE)
(74) Vertreter: Horn, Klaus

(57) **Zusammenfassung**

Die vorliegende Erfindung betrifft das technische Gebiet der Windkraftmaschinen, insbesondere solche, deren Drehachse im wesentlichen rechtwinklig zur Windrichtung und deren Rotorblätter im wesentlichen vertikal mit Verbindungsarmen zur Antriebswelle angeordnet sind.

Es liegt der Erfindung die Aufgabenstellung zu Grunde, eine Verbesserung und Weiterentwicklung der Raumform und ihrer wesentlichen Merkmale des eingangs genannten Windkraftanlagentyps zweiter Alternative zu schaffen. Insbesondere war die Biege- und Schwingungsbeanspruchung der Anlagenteile bei Wahrung der notwendige Steifigkeit und bei geringerer Eigenmasse, insbesondere der Rotorteile, zu verringern.

Erfindungsgemäß wird diese Aufgabenstellung vermittels der in der Anspruchsfassung unter 2.1 bis 2.3 dargestellten Merkmale durch die Gestaltungen hinsichtlich der Anordnungselemente und Raumform der erfindungsgemäßen Windkraftmaschine gelöst.

Die besonderen Vorzüge dieser erfindungsgemäßen Lösung bestehen einerseits darin, dass der Hauptteil der rotierenden Anlagenanteile aus leichtem faserverstärktem Kunststoff bestehen, wodurch die rotierenden Massen mit ihren Fliehkraftanteilen bei sehr hoher Festigkeit und Stabilität dieser Anteile gering gehalten werden können. Damit erhöht sich die Betriebssicherheit dieser vorgeschlagenen Lösung im Vergleich zu technischen Lösungen des Standes der Technik erheblich. Andererseits darin, dass durch eine verringerte Kopfmasse die Schwingungsanfälligkeit reduziert wird und deshalb das Arbeitsspektrum erhöht wird. Die verringerte Massen trägt auch zu einem besseren dynamischen Verhalten beim Anlauf und beim Bremsen bei. Darüber hinaus können Windböen eher in Energie umgesetzt werden, da die trägen Massen reduziert sind.

## Beschreibung

Die vorliegende Erfindung betrifft das technische Gebiet der Windkraftmaschinen, insbesondere solche, deren Drehachse im wesentlichen rechtwinklig zur Windrichtung und deren Rotorblätter im wesentlichen vertikal mit Verbindungsarmen zur Antriebswelle angeordnet sind.

Einrichtungen aus der Gattung der Windräder bzw. der Windkraftmaschinen/Windkraftanlagen sind hinlänglich bekannt. Beispielsweise solche, die in überwiegender Anzahl aufgestellt, als Anlagen mit einer Drehachse, die im wesentlichen in Windrichtung liegt, konzipiert sind.

Aber auch die diese Erfindung betreffenden, in der Minderzahl aufgestellten Anlagen, deren Drehachse im wesentlichen rechtwinklig zur Windrichtung vorgesehen ist, sind insbesondere seit etwa 1927 als H-Darrieus-Rotoren bekannt und sind in etlichen Ausführungsformen in das Schrifttum eingegangen. Diese Anlagen besitzen den Vorteil, dass sie nicht andauernd in Windrichtung ausgerichtet werden müssen und damit der apparative Aufwand zur Nachführung in die Windrichtung entfällt. Diese Anlagen besitzen aber auch verschiedene Nachteile, denen sich die verschiedensten Schriften widmen, um diesen Nachteilen abzuhelfen. Ein solcher Nachteil dieser Anlagengruppe besteht darin, dass sie i.d.R. nicht selbstständig anlaufen, dem beispielsweise die Schriften aus dem Schriftenkomplex DE 44 34 764 718, EP 0807 71 914 und WO 95/09304 durch erfindungsgemäße Starthilfeklappen abhelfen. Jedoch besitzen diese technischen Lösungen dieser drei Schriften einen relativ komplizierten Ständeraufbau.

Die DE 195 44 400 befasst sich mit Verbesserungen beim Schwachwindanlauf durch spezielle Organe an den Rotorblättern und die DE 101 25 299 befasst sich mit der Wirkungsgraderhöhung solcher Rotoren durch Abbiegungen bzw. Abknickungen an den Rotorblättern.

Die DE 20 2006 011 005 und die DE 94 19 221.9 beschreiben eine technische Lösung, die mit einem waagerechten Querträger pro senkrechtes Rotorblatt und ein solcher die Unterkante der Rotorblätter mit der Rotorachse verbindend auskommt. Zuzüglich verbindet in der DE 94 19 221.9 ein radial angeordneter Flügelring die Rotorblätter, um Stabilität und Vibrationsverhalten an und in den Rotorblättern in Grenzen zu halten. Inwieweit dies ohne weitere Verbindung zur Rotorachse gelingt bleibt fraglich, da dadurch dem am waagerechten Querträger an der Verbindung zum Rotorblatt angreifenden Moment durch die Windlast nicht begegnet werden kann. Diese zuzügliche Sicherheitsvorkehrung ist in der DE 20 2006 011 005 nicht offenbart.

Von diesem Stand der Technik und seinen Mängeln ausgehend, liegt der Erfindung die Aufgaben- und Zielstellung zu Grunde, eine Verbesserung und Weiterentwicklung der Raumform und ihrer wesentlichen Merkmale des eingangs genannten Windkraftanlagentyps zweiter Alternative zu schaffen. Insbesondere war die Biege- und Schwingungsbeanspruchung der Anlagenteile bei Wahrung der notwendige Steifigkeit und bei geringerer Eigenmasse, insbesondere der Rotorteile, zu verringern und insgesamt die Funktions- und Betriebssicherheit zu erhöhen.

Erfindungsgemäß wird diese Aufgaben- und Zielstellung vermittels der in der Anspruchsfassung unter 2.1 bis 2.3 dargestellten Merkmale durch die Gestaltungen hinsichtlich der Anordnungselemente und Raumform der erfindungsgemäßen Windkraftmaschine gelöst.

Die erfindungsgemäße Anordnung und Raumform und die vorteilhaften Wirkungen dieser erfindungsgemäßen technischen Lösung ergeben sich nicht abschließend aus folgenden der näheren Erläuterung dienenden beispielhaften Figuren.

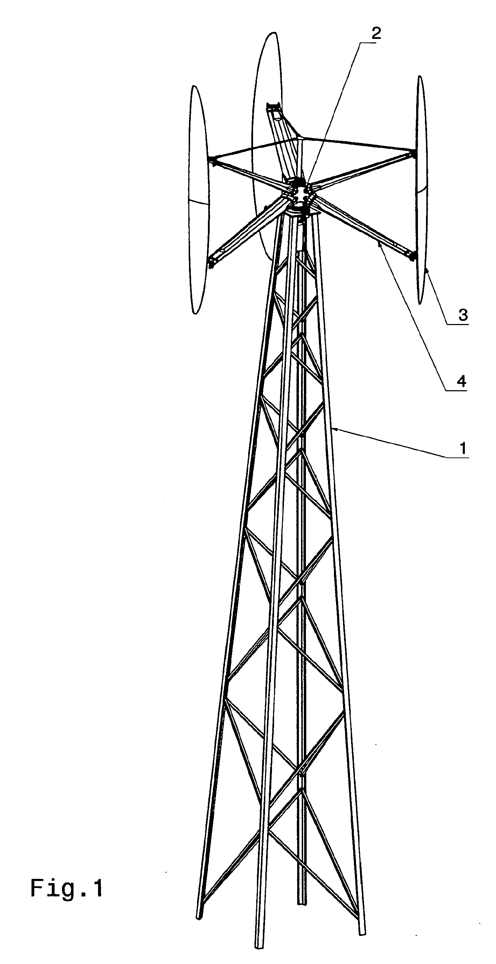

Fig. 1 zeigt die Gesamtraumform der Windkraftmaschine mit einem einfachen üblichen Gittermast 1, der keine Sonderkonstruktion darstellt. Am oberen Ende des Gittermastes 1 ist eine umschließende Plattform 2 und sind die Rotorblätter 3 mit ihren Querträgern 4 als Verbindung zur Rotorachse dargestellt.

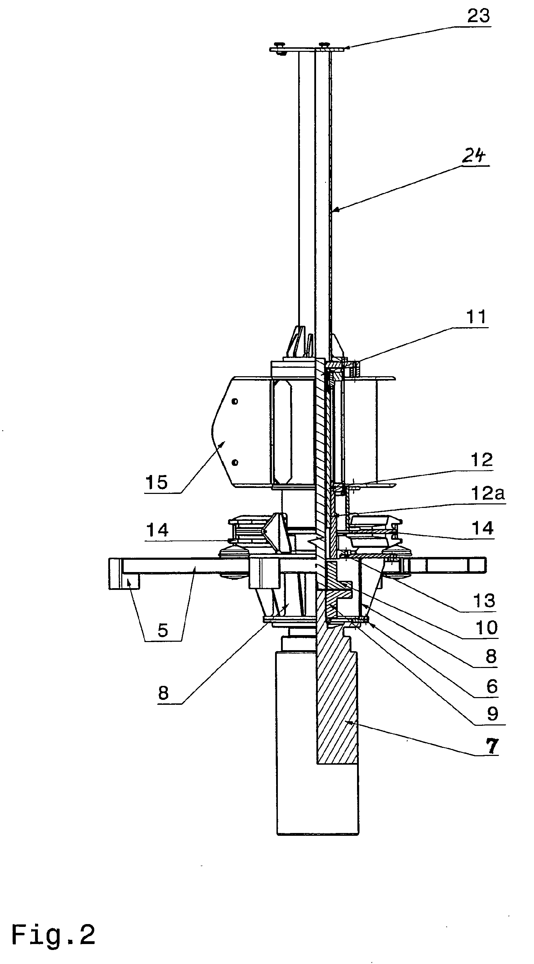

Fig. 2 zeigt innerhalb eines Turmkopfes 5 einen Zwischenflansch 6, der die Verbindung zwischen dem Getriebe/Generator 7 und einer Laterne 8 herstellt. Innerhalb der Laterne 8, die mit dem Turmkopf 5 verbunden ist, ist als Kupplung eine Klauenkupplung 9/10 zur Verbindung des Getriebes/Generators 7 mit einer Welle 11 vorgesehen. Auf der Welle 11 ist ein Achsrohr 12 mit Flansch 13 angeordnet, um die Verbindung zu einer Bremse 14 herzustellen, die im Bedarfsfall den Rotor abbremst. Am Achsrohr 12 mit Achskörper 12a und seinem Flansch 13 ist eine Nabe 15 angeordnet, die die Querträger 4 für die Rotorblätter 3 trägt.

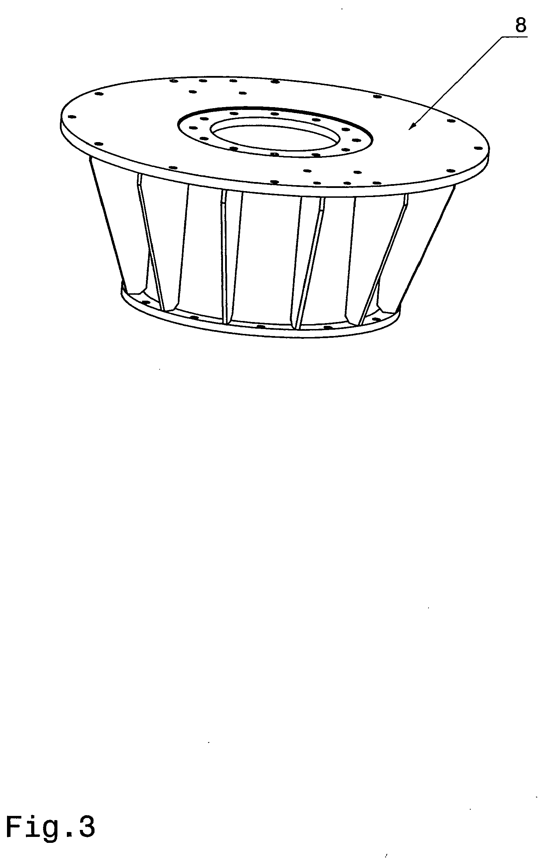

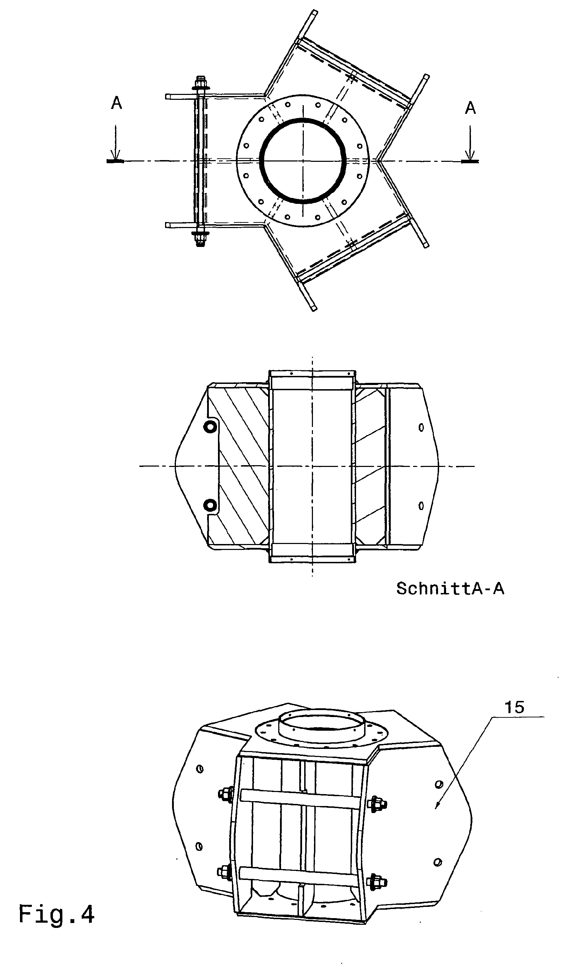

Fig. 3 zeigt die Ausgestaltung der Laterne 8 und Fig. 4 zeigt die Ausgestaltung der Nabe 15, die für drei Rotorblätter ausgelegt ist.

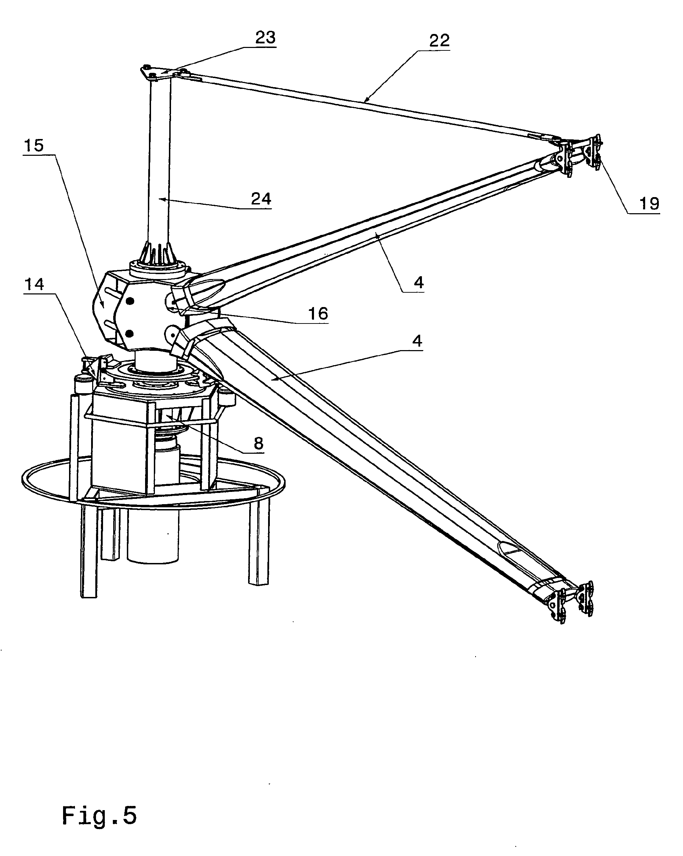

In Fig. 5 ist die Ausgestaltung, Anbringung und Anordnung der Querträger 4 dargestellt. Diese erfindungsgemäße technische Lösung sieht für jedes Rotorblatt 3 zwei Querträger 4 vor, die in nach außen, d.h. zum Rotorblatt hin, offen angeordneter V-Form angeordnet sind. Die Querträger 4 sind zur Sicherung der nötigen Eigenstabilität und zur Aufnahme der auftretenden Kräfte mit einem zur Rotorachse hin sich vergrößerndes Querschnittsprofil vorgesehen. Dieses Querträgerprofil ist darüber hinaus aerodynamisch ausgebildet und aus einem sehr leichten festen Material vorgesehen. Vorzugsweise sind diese Querträger 4 aus faserverstärktem Kunststoff ausgebildet. Dadurch werden die zu bewegenden Massen gering gehalten.

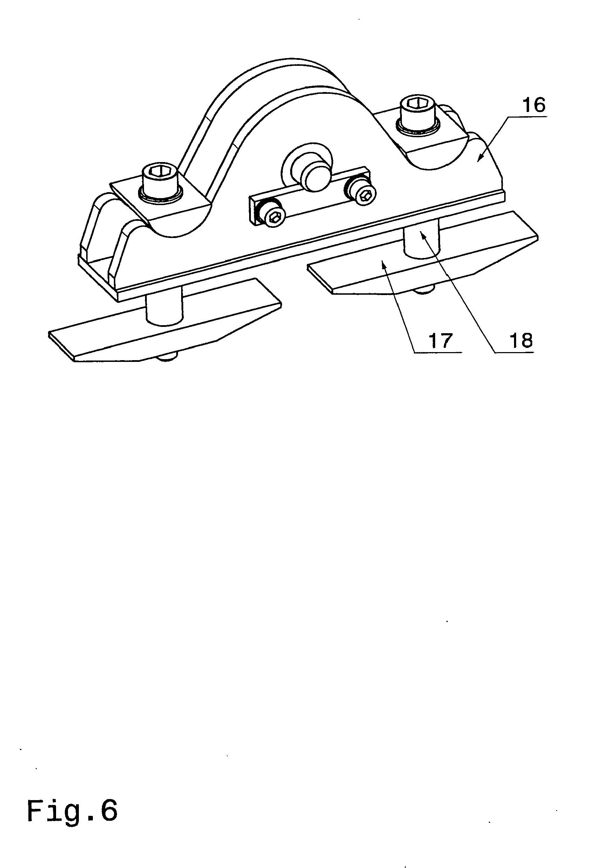

Fig 6 zeigt die am nabenseitigen Ende des Querträgers 4 in seinen Kunststoffkörper eingeformten Befestigungskonsolen 16. Jeweils zwei Stück dieser Befestigungskonsolen 16 sind mit ihren Zugplatten 17 und Buchsen 18 in den Kunststoffkörper des Querträgers 4 eingeformt, wodurch eine schnelle und sichere Befestigung des Querträgers 4 an der Nabe 15 ermöglicht wird.

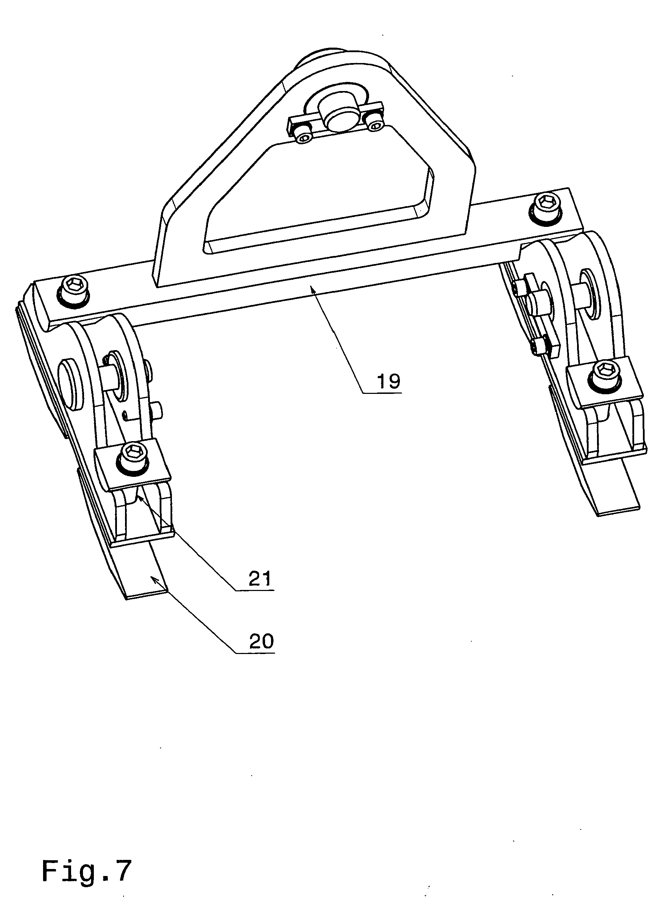

Fig. 7 zeigt in analoger Ausführungsform die Befestigungsdoppelkonsole 19, die am rotorblattseitigem Ende des Querträgers 4 zur Befestigung mittels zwei Stück des nicht dargestellten Rotorblatts 3 vorgesehen sind. Auch diese Befestigungsdoppelkonsolen 19 sind mit ihren Zugplatten 20 und Buchsen 21 in den Kunststoffkörper des Rotorblattes 3 eingeformt. Wie Fig. 5 zeigt, ist die V-förmige und mit dem Rotorblatt 3 dreieckbildende Einzelraumform "Querträger 4 - Rotorblatt 3" mittels der Anschlagpunkte an der Befestigungsdoppelkonsole 19 und einer Strebe 22 sowie einem Abspannflansch 23 an einem Abspannturm 24, dieser aufgesetzt auf die Nabe 15, in sich stabilisiert. Die Rotorblätter 3 sind aus einem sehr leichten festen Material, vorzugsweise aus faserverstärktem Kunststoff ausgebildet

Die besonderen Vorzüge dieser erfindungsgemäßen Lösung bestehen einerseits darin, dass der Hauptteil der rotierenden Anlagenanteile aus leichtem faserverstärktem Kunststoff bestehen, wodurch die rotierenden Massen mit ihren Fliehkraftanteilen bei sehr hoher Festigkeit und Stabilität dieser Anteile gering gehalten werden können. Damit erhöht sich die Betriebssicherheit dieser vorgeschlagenen Lösung im Vergleich zu technischen Lösungen des Standes der Technik erheblich. Weitere Vorzüge bestehen darin, dass durch eine verringerte Kopfmasse die Schwingungsanfälligkeit reduziert wird und deshalb das Arbeitsspektrum erhöht wird. Die verringerte Massen trägt auch zu einem besseren dynamischen Verhalten beim Anlauf und beim Bremsen bei. Darüber hinaus können Windböen eher in Energie umgesetzt werden, da die trägen Massen reduziert sind.

## Patentansprüche

**1.** deren Drehachse im wesentlichen rechtwinklig zur Windrichtung vorgesehen ist und deren Rotorblätter im wesentlichen vertikal mit Verbindungsarmen zur Antriebswelle angeordnet sind, mit folgenden Merkmalen:
2.1 bei der die stationären Anteile der Windkraftmaschine im wesentlichen bestehen aus
einem Turmkopfes (5), einem Zwischenflansch (6), der die Verbindung zwischen einem Getriebe/Generator (7) und einer Laterne (8) herstellt, einer Laterne (8), die mit dem Turmkopf (5) verbunden ist, den Teilen einer Kupplung (9/10) zur Verbindung des Getriebes/Generators (7) mit einer Welle (11) und den Teilen einer Bremse (14), die im Bedarfsfall den Rotor abbremst,
2.2 bei der die rotierenden Anteile der Windkraftmaschine im wesentlichen bestehen aus
einer Welle (11), der ein Achsrohr (12) mit Achskörper 12a und Flansch (13) zugeordnet sind, um die Verbindung zwischen Nabe (15) und Bremse (14) herzustellen, einer Nabe (15), die nach außen offen, V-förmig angeordnete Querträger (4) für Rotorblätter (3) trägt, Rotorblättern (3), die außen an den Querträgern (4) vermittels Befestigungskonsolen (16) und Befestigungsdoppelkonsolen (19) nahezu vertikal angeordnet sind, einer Strebe (22) sowie einem Abspannflansch (23) und einem zentral angeordneten Abspannturm (24) zum Zwecke der Stabilisierung der dreieckbildenden Einzelraumform "Querträger (4) - Rotorblatt (3)".

**2.** 2.1 bei der die Querträger (4) zum Zwecke der Sicherung der nötigen Eigenstabilität und zur Aufnahme der auftretenden Kräfte mit einem zur Rotorachse hin sich vergrößerndes Querschnittsprofil vorgesehen und dieses aerodynamisch ausgebildet ist,

**2.** 2.2 bei der die Querträger (4) aus faserverstärktem Kunststoff ausgebildet sind und die jeweiligen Befestigungskonsolen (16) mit ihren Zugplatten (17) und Buchsen (18) in den Kunststoffkörper des Querträgers (4) eingeformt sind,

**2.** 2.3 bei der die Rotorblätter (3) aus faserverstärktem Kunststoff ausgebildet sind und die jeweiligen Befestigungsdoppelkonsolen (19) mit mit ihren Zugplatten (20) und Buchsen (21) in den Kunststoffkörper des Rotorblattes (3) eingeformt sind,

**2.** 3 im übrigen bestehend aus einem einfachen üblichen Gittermast (1), der keine Sonderkonstruktion darstellt, mit einer umschließenden Plattform (2), in deren Nähe alle weiteren Windkraftmaschinenanteile angeordnet sind.
wobei das Merkmal 1 den Oberbegriff und die übrigen untergliederten Merkmale den kennzeichnenden Teil bilden.
